# EUROPÄISCHE PATENTANMELDUNG

(11) **EP 4 265 511 A1**
(43) Veröffentlichungstag der Anmeldung: **25.10.2023**
(21) Anmeldenummer: 23159386.4
(22) Anmeldetag: 01.03.2023
(51) Int. Cl.: B62M 6/45

(54) **VERFAHREN ZUM BETREIBEN EINER ANTRIEBSEINHEIT EINES ELEKTROFAHRRADS**

(30) Priorität: 25.03.2022 DE 102022202979
(71) Anmelder: Robert Bosch GmbH, 70442 Stuttgart (DE)
(72) Erfinder: Manewald, Merlin Martin, 72764 Reutlingen (DE); Eberle, Sebastian, 72072 Tuebingen (DE); Reisige, Christian, 72072 Tuebingen (DE); Reck, Joseph, 70794 Filderstadt (DE)

(57) **Zusammenfassung**

Die vorliegende Erfindung betrifft ein Verfahren zum Betreiben einer Antriebseinheit (102) eines Elektrofahrrads (100), umfassend die Schritte: Ermitteln eines zeitlichen Ist-Drehmoment-Verlaufs (1) eines mittels Muskelkraft eines Fahrers des Elektrofahrrads (100) erzeugten Fahrerdrehmoments (10), Abschätzen eines zukünftigen Drehmoment-Verlaufs (2) durch Extrapolieren des ermittelten Ist-Drehmoment-Verlaufs (1), Ermitteln, ob der abgeschätzte zukünftige Drehmoment-Verlauf (2) innerhalb einer vorbestimmten ersten Zeitspanne (3) einen vorbestimmten ersten Drehmoment-Schwellwert (4) unterschreitet, und gesteuertes Reduzieren eines mittels der Antriebseinheit (102) erzeugten Motordrehmoments (5), wenn der abgeschätzte zukünftige Drehmoment-Verlauf (2) innerhalb der ersten Zeitspanne (3) den ersten Drehmoment-Schwellwert (4) unterschreitet.

## Beschreibung

### Stand der Technik

Die vorliegende Erfindung betrifft ein Verfahren zum Betreiben einer Antriebseinheit eines Elektrofahrrads, und ein Elektrofahrrad.

Bekannt sind Elektrofahrräder mit Antriebseinheiten, um ein durch einen Fahrer erzeugtes Fahrerdrehmoment mittels Motorkraft zu unterstützen. Üblicherweise erfolgt die motorische Unterstützung dabei nur dann, wenn der Fahrer auch selbst ein gewisses Fahrerdrehmoment aufbringt, das heißt nur während einer Pedalbetätigung durch den Fahrer. Stoppt der Fahrer die Pedalbetätigung, ist vorgesehen oder beispielsweise auch aufgrund gesetzlicher Vorgaben vorgeschrieben, dass die Erzeugung eines unterstützenden Motordrehmoments stoppt. Üblicherweise wird dabei die Antriebseinheit abgeschaltet. Häufig führt dies jedoch zu unerwünschten Reaktionen des Antriebsstrangs. Zum einen kann durch das Abschalten eine unerwünschte Geräuschentwicklung der Antriebseinheit oder des Antriebsstrangs auftreten. Zum anderen kann durch ein kurzzeitiges Nachlaufen der Antriebseinheit eine kurze gegenläufige Krafteinleitung auf das Pedal auftreten, was sich am Fuß des Fahrers durch ein sogenanntes "Nachschlagen" (englisch "Kickback") bemerkbar macht. Dies tritt besonders deutlich auf, wenn die Antriebseinheit den Antriebsstrang nicht ohne Pedalbewegung antreiben kann (kein Verbau eines sog. Fahrerfreilaufs).

### Offenbarung der Erfindung

Das erfindungsgemäße Verfahren mit den Merkmalen des Anspruchs 1 zeichnet sich demgegenüber dadurch aus, dass eine unerwünschte Geräuschentwicklung und ein Nachschlagen einer Antriebseinheit eines Elektrofahrrads signifikant reduziert oder vollständig verhindert werden kann. Dies wird erreicht durch ein Verfahren, umfassend die Schritte:
- Ermitteln eines zeitlichen Ist-Drehmoment-Verlaufs eines Fahrerdrehmoments, welches ein Fahrer des Elektrofahrrads, insbesondere während eines Betriebs des Elektrofahrrads, mittels Muskelkraft erzeugt,
- Abschätzen eines zukünftigen Drehmoment-Verlaufs durch Extrapolieren des ermittelten Ist-Drehmoment-Verlaufs,
- Ermitteln, ob der abgeschätzte zukünftige Drehmoment-Verlauf innerhalb einer vorbestimmten ersten Zeitspanne einen vorbestimmten ersten Drehmoment-Schwellwert unterschreitet, und
- gesteuertes Reduzieren eines mittels der Antriebseinheit erzeugten Motordrehmoments, wenn der abgeschätzte zukünftige Drehmoment-Verlauf innerhalb der ersten Zeitspanne den ersten Drehmoment-Schwellwert unterschreitet.

Mit anderen Worten erfolgt bei dem Verfahren eine Erfassung, insbesondere durch Aufzeichnung, des Ist-Drehmoment-Verlaufs des Fahrerdrehmoments. Das heißt, der zeitliche Ist-Drehmoment-Verlauf beschreibt vorzugsweise einen in der Vergangenheit liegenden Drehmoment-Verlauf bis hin zu einem momentanen Wert des Drehmoments zum momentanen Zeitpunkt. Beispielsweise erfolgt das Ermitteln des Ist-Drehmoment-Verlaufs mittels eines Drehmomentsensors.

Basierend auf diesem erfassten Ist-Drehmoment-Verlauf wird mittels Extrapolation abgeschätzt, wie der Drehmoment-Verlauf des Fahrerdrehmoments zukünftig aussehen wird. Der so ermittelte zukünftige Drehmoment-Verlauf beschreibt insbesondere einen zeitlichen Drehmoment-Verlauf ausgehend von dem momentanen Zeitpunkt in die Zukunft, bevorzugt zumindest für eine vorbestimmte Zeitspanne, von beispielsweise mindestens 5 ms, vorzugsweise bis zu mehreren Sekunden, beispielsweise bis zu 10 Sekunden.

Anschließend wird analysiert, ob der abgeschätzte zukünftige Drehmoment-Verlauf innerhalb der vorbestimmten ersten Zeitspanne den vorbestimmten ersten Drehmoment-Schwellwert unterschreitet. Wird eine solche Unterschreitung ermittelt, so erfolgt anschließend, vorzugsweise unmittelbar im Ansprechen auf diese Ermittlung, das gesteuerte Reduzieren des Motordrehmoments.

Wenn der abgeschätzte zukünftige Drehmoment-Verlauf den ersten Drehmoment-Schwellwert innerhalb der ersten Zeitspanne nicht unterschreitet, so kann bevorzugt ein Normalbetrieb der Antriebseinheit unbeeinträchtigt fortgeführt werden.

Das Verfahren bietet somit den Vorteil, dass ein Stoppen der Pedalbetätigung des Fahrers oder ein Unterschreiten der Pedalbetätigung von einem bestimmten unteren Drehmoment-Grenzwert bereits im Vorhinein, vor dessen Eintreten erfasst werden kann. Durch das Steuern der Antriebseinheit in Abhängigkeit dieser abgeschätzten zukünftigen Betätigungsweise kann somit das Reduzieren des Motordrehmoments insbesondere mit einer gewissen zeitlichen Reserve vorbereitet werden, sodass beispielsweise durch ein weniger abruptes Stoppen der Antriebseinheit ein Nachschlagen und/oder eine Geräuschentwicklung signifikant verringert oder vollständig unterdrückt werden können. Dadurch kann ein für den Fahrer besonders komfortabler Betrieb bereitgestellt werden, da beispielsweise der Fahrerwunsch besonders zuverlässig und präzise und ohne unerwartete Reaktionen des Antriebsstrangs umgesetzt werden kann.

Bevorzugt erfolgt das Ermitteln des zeitlichen Ist-Drehmoment-Verlaufs jeweils zu zeitlich diskreten Zeitpunkten, welche insbesondere in vorbestimmten Abständen voneinander liegen. Beispielsweise kann stets im Abstand von 1 ms, oder mehreren Millisekunden, jeweils ein Messsample für das Fahrerdrehmoment erfasst werden. Vorzugsweise wird als der ermittelte zeitliche Ist-Drehmoment-Verlauf dabei mindestens die beiden zuletzt erfassten Messsamples angesehen. Das heißt, dass Extrapolieren kann mindestens anhand der beiden zuletzt erfassten Messsamples für das Fahrerdrehmoment erfolgen. Somit kann eine besonders einfach umsetzbare Durchführung des Verfahrens ermöglicht werden.

Bevorzugt beträgt der vorbestimmte erste Drehmoment-Schwellwert mindestens -2 Nm, vorzugsweise maximal 5 Nm, besonders bevorzugt 2 Nm.

Insbesondere wird das Verfahren während eines Betriebs der Antriebseinheit des Elektrofahrrads durchgeführt. Weiter bevorzugt wird das Verfahren nur dann durchgeführt, wenn der Fahrer des Fahrrads mindestens ein vorbestimmtes Fahrerdrehmoment aufbringt, das heißt nur während der Fahrer aktiv pedaliert.

Die Unteransprüche zeigen bevorzugte Weiterbildungen der Erfindung.

Bevorzugt umfasst das gesteuerte Reduzieren des Motordrehmoments den Schritt: Reduzieren des Motordrehmoments auf einen vorbestimmten Drehmoment-Wert innerhalb einer vorbestimmten zweiten Zeitspanne. Vorzugsweise beträgt der vorbestimmte Drehmoment-Wert 0 Nm. Dadurch wird sichergestellt, dass der Betrieb der Antriebseinheit zuverlässig und auf eine genau bestimmte Weise reduziert bzw. eingeschränkt wird, wenn erkannt wurde, dass das Fahrerdrehmoment den ersten Drehmoment-Schwellwert unterschreiten wird.

Vorzugsweise ist die zweite Zeitspanne eine vorbestimmte Mindest-Zeitspanne von mehr als Null Sekunden. Das heißt, die zweite Zeitspanne ist größer als Null Sekunden, was insbesondere bedeutet, dass das Motordrehmoment nicht schlagartig reduziert wird, sondern allmählich. Dadurch kann das Nachschlagen der Antriebseinheit und die Geräuschentwicklung besonders zuverlässig signifikant reduziert oder vollständig verhindert werden.

Besonders bevorzugt ist die zweite Zeitspanne kleiner als die erste Zeitspanne. Das heißt, das Motordrehmoment wird noch vor dem unterschreiten des ersten Drehmoment-Schwellwert durch den zukünftigen Drehmoment-Verlauf auf den vorbestimmten Drehmoment-Wert reduziert. Dadurch wird besonders zuverlässig sichergestellt, dass vor dem extrapolierten unterschreiten des ersten Drehmoment-Schwellwerts das Motordrehmoment bereits ausreichend reduziert ist.

Bevorzugt beträgt die zweite Zeitspanne mindestens 2 ms, vorzugsweise mindestens 5 ms, insbesondere maximal 100 ms. Somit kann sichergestellt werden, dass gleichzeitig eine hinreichend langsame und ausreichend schnelle Reduzierung des Motordrehmoments erfolgt.

Weiter bevorzugt wird das gesteuerte Reduzieren des Motordrehmoments mit einem vorbestimmten Reduktions-Gradienten durchgeführt. Als Reduktions-Gradient wird dabei ein vorbestimmtes Verhältnis eines Betrags einer Gesamt-Reduktion zu einer Zeitspanne, innerhalb der diese Gesamt-Reduktion durchgeführt wird, angesehen. Mit anderen Worten entspricht der Reduktions-Gradient einer Steigung eines zeitlichen Motordrehmoment-Verlaufs. Insbesondere ist der Reduktions-Gradient dabei negativ. Bevorzugt kann der Reduktions-Gradient konstant sein, für eine besonders einfache Durchführung des Verfahrens. Alternativ bevorzugt ist der Reduktion-Gradient variabel, insbesondere derart, dass zu Beginn des gesteuerten Reduzierens ein sehr großer Betrag des Reduktions-Gradienten, das heißt eine schnelle bzw. starke Reduktion des Motordrehmoments, vorliegt, wobei der Betrag des Reduktions-Gradienten bei einer Annäherung an den zu erzielenden vorbestimmten Drehmoment-Wert signifikant kleiner ist, das heißt eine langsamerer bzw. schwächerer Reduktion des Motordrehmoments, erfolgt. Dadurch kann besonders zuverlässig verhindert werden, dass durch die Drehmoment-Reduktion eine Geräuschentwicklung oder ein Nachschlagen der Antriebseinheit entsteht, da ein sanftes Abschalten der Antriebseinheit, und damit beispielsweise ein sanftes Abbremsen eines Rotors eines Elektromotors der Antriebseinheit ermöglicht wird.

Vorzugsweise umfasst das Verfahren ferner die Schritte:
- Ermitteln einer dritten Zeitspanne, welche als eine Dauer, insbesondere ausgehend vom momentanen Zeitpunkt, bis zum Unterschreiten des ersten Drehmoment-Schwellwerts durch den abgeschätzten zukünftigen Drehmoment-Verlauf definiert ist, und
- Anpassen der zweiten Zeitspanne und/oder des Reduktions-Gradienten in Abhängigkeit der ermittelten dritten Zeitspanne.
Mit anderen Worten wird die zweite Zeitspanne und/oder der Reduktions-Gradient in Abhängigkeit der Dauer, bis der abgeschätzte zukünftige Drehmoment-Verlauf den ersten Drehmoment-Schwellwert unterschreitet, variabel angepasst. Das heißt, dass beispielsweise ein sehr starkes Reduzieren des Motordrehmoments in kurzer Zeit erfolgt, wenn eine kleine dritte Zeitspanne ermittelt wird. Analog kann bei größerer dritter Zeitspanne eine Erhöhung der zweiten Zeitspanne und/oder des Reduktions-Gradienten erfolgen. Damit kann bei besonders zuverlässiger Sicherstellung der ausreichend schnellen Reduktion ein besonders sanftes Abschalten der Antriebseinheit bei langsamerem Ausklingen der Pedalbetätigung ermöglicht werden.

Besonders bevorzugt umfasst das gesteuerte Reduzieren des Motordrehmoments die Schritte:
- erstes Reduzieren des Motordrehmoments in einer ersten Teil-Zeitspanne der zweiten Zeitspanne mit einem ersten Reduktions-Gradienten, und
- zweites Reduzieren des Motordrehmoments in einer zweiten Teil-Zeitspanne der zweiten Zeitspanne mit einem zweiten Reduktions-Gradienten.
Die zweite Teil-Zeitspanne liegt dabei zeitlich, insbesondere unmittelbar, nach der ersten Teil-Zeitspanne. Weiterhin ist ein Betrag des zweiten Reduktions-Gradienten kleiner als ein Betrag des ersten Reduktions-Gradienten. Bevorzugt sind die erste Teil-Zeitspanne und die zweite Teil-Zeitspanne in einem vorbestimmten festen Verhältnis zueinander definiert. Alternativ bevorzugt kann das Verhältnis angepasst werden in Abhängigkeit der gesamten zweiten Zeitspanne. Somit erfolgt ein im Wesentlichen zweistufiges Reduzieren des Motordrehmoments, zunächst mit einem großen Betrag des Reduktions-Gradienten und anschließend mit einem kleineren Betrag des Reduktions-Gradienten. Dadurch kann auf einfache und zuverlässige Weise ein optimaler Abschaltvorgang der Antriebseinheit bereitgestellt werden, der zuverlässig ein Nachschlagen und eine Geräuschentwicklung verhindern kann.

Vorzugsweise wird das gesteuerte Reduzieren des Motordrehmoments in Form eines exponentiellen Reduzierens durchgeführt. Dadurch kann auf besonders einfache Weise ein funktioneller Zusammenhang implementiert werden, der zu Beginn des gesteuerten Reduzierens ein starkes Reduzieren pro Zeit, und später ein langsames Ausklingen des Reduzierens ermöglicht.

Bevorzugt umfasst das Verfahren ferner die Schritte:
- Vergleichen eines Momentanwerts des Fahrerdrehmoments mit einem vorbestimmten zweiten Drehmoment-Schwellwert, und
- Abschalten der Antriebseinheit, wenn der ermittelte Momentanwert kleiner oder gleich dem zweiten Drehmoment-Schwellwert ist.
Insbesondere erfolgt das Abschalten dabei sofort. Vorzugsweise wird als Abschalten dabei eine Reduktion des Motordrehmoments um 100 % angesehen. Damit kann beispielsweise ein zusätzliches Abschalt-Kriterium bereitgestellt werden, um die Antriebseinheit zuverlässig abzuschalten, wenn dies beispielsweise aufgrund eines sehr niedrigen Fahrerdrehmoments erforderlich ist.

Besonders bevorzugt ist der zweite Drehmoment-Schwellwert kleiner als der erste Drehmoment-Schwellwert. Insbesondere beträgt der zweite Drehmoment-Schwellwert maximal 0 Nm, bevorzugt maximal -5 Nm, besonders bevorzugt maximal -10 Nm.

Vorzugsweise umfasst das Verfahren ferner die Schritte:
- Aufzeichnen des zeitlichen Ist-Drehmoment-Verlaufs des Fahrerdrehmoments während eines Betriebs des Elektrofahrrads, und
- Anpassen von zumindest einem Schwellwert und/oder von zumindest einer Zeitspanne mittels maschinellen Lernens basierend auf dem aufgezeichneten zeitlichen Ist-Drehmoment-Verlauf.
Bevorzugt erfolgt dabei eine Auswertung, ob mit dem aufgezeichneten Drehmomentverlauf nachfolgend ein Stoppen des Pedalierens des Fahrers einherging, wobei vorteilhafterweise basierend auf dieser Information das Anpassen erfolgt. Mit anderen Worten wird der zeitliche Ist-Drehmoment-Verlauf des Fahrerdrehmoments über einen längeren Zeitraum des Betriebs des Elektrofahrrads überwacht und aufgezeichnet, und der Schwellwert und/oder die Zeitspanne selbstlernend anhand einer Analyse dieses aufgezeichneten Ist-Drehmoment-Verlaufs, beispielsweise mittels einer Steuereinheit, angepasst. Besonders bevorzugt wird hierbei der erste Drehmoment-Schwellwert und/oder der zweite Drehmoment-Schwellwert und/oder die erste Zeitspanne und/oder die zweite Zeitspanne selbstlernend angepasst. Besonders bevorzugt können zusätzlich oder alternativ der erste Reduktions-Gradient und/oder der zweite Reduktions-Gradient und/oder die erste Teil-Zeitspanne und/oder die zweite Teil-Zeitspanne selbstlernend angepasst werden. Dadurch kann eine Optimierung der vorbestimmten Schwellwerte und/oder Zeitspannen erfolgen, um die Durchführung des Verfahrens besonders zuverlässig, präzise und für den Fahrer mit hohem Komfort zu ermöglichen. Hierbei kann insbesondere vorgesehen sein, dass nachfolgend stets für den lernenden Algorithmus ersichtlich wird, ob der Fahrer tatsächlich mit dem Pedalieren aufhören wollte oder ob dieser weiter Pedalieren wollte. Diese nachträgliche Information kann verwendet werden, um künftige Schwellwerte entsprechend anzupassen.

Weiter bevorzugt erfolgt das Extrapolieren mittels Polynom-Approximation, besonders bevorzugt mittels linearer Approximation, des ermittelten zeitlichen Ist-Drehmoment-Verlaufs. Das heißt, es wird eine, beispielsweise virtuelle, Funktion ermittelt, die basierend auf dem ermittelten Ist-Drehmoment-Verlauf eine Prognose des zukünftigen Verlaufs ermöglicht. Insbesondere wird der Ist-Drehmoment-Verlauf dabei als eine mathematische Funktion ermittelt. Die Polynom-Approximation wird insbesondere basierend auf einer ersten Ableitung dieser mathematischen Funktion ermittelt. Als lineare Approximation wird dabei insbesondere eine Gerade, die die momentane Steigung des Ist-Drehmoment-Verlaufs aufweist, angesehen. Somit kann auf einfache Weise für eine ausreichend lange Zeitspanne eine präzise Abschätzung des zukünftigen Drehmoment-Verlaufs ermöglicht werden.

Weiterhin führt die Erfindung zu einem Elektrofahrrad, umfassend eine Antriebseinheit und eine Steuereinheit. Die Steuereinheit ist dabei eingerichtet, die Antriebseinheit gesteuert zu betätigen. Ferner ist die Steuereinheit eingerichtet, das beschriebene Verfahren durchzuführen.

Bevorzugt umfasst das Elektrofahrrad ein Kettenblatt und einen Kurbeltrieb. Kettenblatt und Kurbeltrieb sind dabei mechanisch starr, insbesondere ohne Freilauf, miteinander verbunden. Bei einem Elektrofahrrad ohne Freilauf zwischen Kettenblatt und Kurbeltrieb wirkt sich das erfindungsgemäße Verfahren besonders vorteilhaft auf einen optimalen Fahrkomfort aus, da sich ein Nachschlagen und/oder eine Geräuschentwicklung beim Abschalten der Antriebseinheit an einem Freilauf-losen Elektrofahrrad besonders deutlich zeigen können.

### Kurze Beschreibung der Zeichnungen

Nachfolgend werden Ausführungsbeispiele der Erfindung unter Bezugnahme auf die begleitende Zeichnung im Detail beschrieben. In der Zeichnung ist:
- Figur 1: eine vereinfachte schematische Ansicht eines Elektrofahrrads, bei dem ein Verfahren zum Betreiben des Elektrofahrrads gemäß einem bevorzugten Ausführungsbeispiel der Erfindung durchgeführt wird,
- Figur 2: eine vereinfachte Darstellung eines zeitlichen Drehmoment-Verlaufs, welcher bei dem Verfahren ermittelt wird,
- Figur 3: eine vereinfachte Darstellung eines alternativen zeitlichen Drehmoment-Verlaufs, welcher bei dem Verfahren ermittelt wird, und
- Figur 4: eine vereinfachte Darstellung eines zeitlichen Motordrehmoment-Verlaufs, der durch das Verfahren bereitgestellt werden kann.

### Ausführungsformen der Erfindung

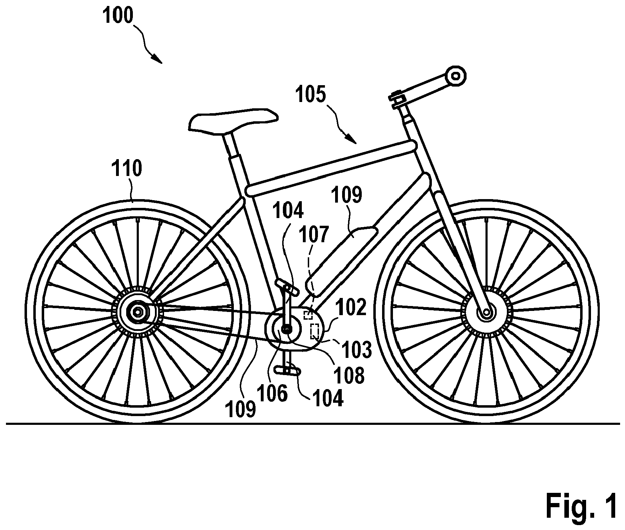

Figur 1 zeigt eine vereinfachte schematische Ansicht eines Elektrofahrrads 100. Das Elektrofahrrad 100 umfasst eine Antriebseinheit 102, welche als ein Elektromotor ausgebildet ist. Die Antriebseinheit 102 ist im Bereich eines Tretlagers 108 des Elektrofahrrads 100 angeordnet, und vorgesehen, um eine über einen Kurbeltrieb 104 aufgebrachte manuelle Tretkraft eines Fahrers des Elektrofahrrads 100 durch ein elektromotorisch erzeugtes Motordrehmoment zu unterstützen.

Ferner umfasst das Elektrofahrrad 100 einen elektrischen Energiespeicher 109, mittels welchem die Antriebseinheit 102 mit elektrischer Energie versorgbar ist.

In die Antriebseinheit 102 ist außerdem eine Steuereinheit 103 integriert.

Der Kurbeltrieb 104 des Elektrofahrrads 100 ist starr, das heißt drehfest, insbesondere ohne Freilauf, mit einem Kettenblatt 106 verbunden. Mittels des Kettenblatts 106 wird eine Fahrradkette 109 angetrieben, über die ein Hinterrad 110 des Elektrofahrrads 100 angetrieben wird. Die Antriebseinheit 102 ist dabei mechanisch mit dem Kettenblatt 106 gekoppelt, um das Motordrehmoment zusätzlich zum Fahrerdrehmoment auf das Kettenblatt 106 aufbringen zu können.

Die Steuereinheit 103 ist dabei eingerichtet, die Antriebseinheit 102 in Abhängigkeit einer Pedalbetätigung eines Fahrers des Elektrofahrrads 100 zu betätigen. Im Detail wird die Antriebseinheit 102 derart gesteuert betätigt, dass in Abhängigkeit eines mittels Muskelkraft des Fahrers erzeugten Fahrerdrehmoments das Motordrehmoment erzeugt wird, um den Fahrer beim Pedalieren motorisch zu unterstützen. Dabei ist vorgesehen, dass das Motordrehmoment nur während einer Pedalbetätigung mit einem vorbestimmten Mindest-Fahrerdrehmoment erzeugt wird. Das heißt, wenn der Fahrer das Pedalieren stoppt, oder das Fahrerdrehmoment das Mindest-Fahrerdrehmoment unterschreitet, muss auch der Betrieb der Antriebseinheit 102 stoppen.

Die Steuereinheit 103 ist dabei eingerichtet, ein Verfahren zum Betrieben der Antriebseinheit 102 gemäß einem bevorzugten Ausführungsbeispiel der Erfindung durchzuführen. Mittels des Verfahrens kann während des Fahrbetriebs, also insbesondere während der Fortbewegung, des Elektrofahrrads 100 eine optimierte Abschaltung der Motorkraftunterstützung durch die Antriebseinheit 102, wenn der Fahrer das Pedalieren aufhört, bereitgestellt werden. Hierbei kann das Reduzieren des Motordrehmoments der Antriebseinheit 102 derart ausgeführt werden, dass ein Nachschlagen sowie eine Geräuschentwicklung signifikant reduziert oder ganz vermieden werden kann.

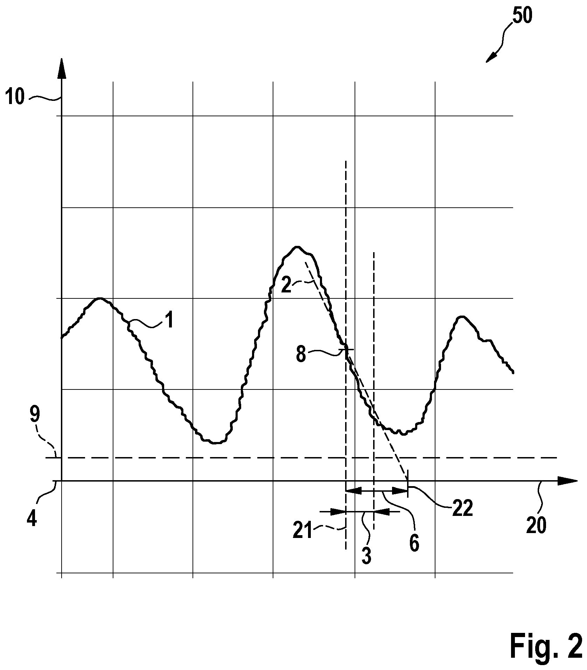

Der Ablauf des Verfahrens wird nachfolgend in Bezug auf die Figuren 2 bis 4 im Detail beschrieben.

Figur 2 zeigt eine beispielhafte Ansicht einer Drehmoment-Aufzeichnung 50, welche während einer Fahrt des Elektrofahrrads 100 erfasst werden kann. Dargestellt ist dabei das Fahrerdrehmoment 10 in Abhängigkeit der Zeit 20. Das Fahrerdrehmoment 10 kann mittels eines Drehmomentsensors 107 (vergleiche Figur 1) erfasst werden. In der Drehmoment-Aufzeichnung 50 der Figur 2 ist somit ein beispielhafter zeitlicher Ist-Drehmoment-Verlauf 1 des Fahrerdrehmoments 10 dargestellt.

Wie in der Figur 2 zu erkennen, ändert sich der aktuelle Wert des Fahrerdrehmoments 10 über der Zeit 20 periodisch, beispielsweise ähnlich einer Sinusschwingung.

Bei dem Verfahren wird mittels der Steuereinheit 103 ein zukünftiger Drehmoment-Verlauf 2, den der Fahrer mittels seiner Muskelkraft voraussichtlich erzeugen wird, abgeschätzt. Die Beschreibung dieser Abschätzung erfolgt nachfolgend anhand des in der Figur 2 beispielhaft angenommenen momentanen Zeitpunkts 21. Zur besseren Nachvollziehbarkeit des Verfahrens ist dieser momentane Zeitpunkt 21 mittig in einen beispielhaften Ist-Drehmoment-Verlauf 1 gelegt. Bei einer tatsächlichen Durchführung des Verfahrens ist zum momentanen Zeitpunkt 21 nur der links von der gestrichelten Linie 21 liegende Teil des ist-Drehmoment-Verlaufs 1 bekannt, beispielsweise durch Aufzeichnung.

Der rechts der gestrichelten Linie 21 liegende Teil der Kurve 1 würde somit in der Zukunft liegen.

Bei dem Verfahren wird der zukünftige Drehmoment-Verlauf 2 durch Extrapolieren des ermittelten Ist-Drehmoment-Verlaufs 1 ausgehend vom momentanen Zeitpunkt 21 abgeschätzt. Das Extrapolieren wird dabei durch lineare Approximation des ermittelten zeitlichen Ist-Drehmoment-Verlaufs 1 durchgeführt. Im Detail wird ein Gradient des Ist-Drehmoment-Verlaufs 1 zum momentanen Zeitpunkt 21 bestimmt. Dadurch ergibt sich der zukünftige Drehmoment-Verlauf 2 als eine Gerade mit der Steigung des Ist-Drehmoment-Verlaufs 1 zum Zeitpunkt 21.

Beispielsweise kann das Ermitteln des zeitlichen Ist-Drehmoment-Verlaufs 1 dadurch erfolgen, dass während der Fahrt des Elektrofahrrads 100 jeweils zu diskreten Zeitpunkten momentane Werte für das Fahrerdrehmoment 10 erfasst werden. In diesem Fall kann das Extrapolieren durch die lineare Approximation dadurch erfolgen, dass der Gradient basierend auf den beiden zuletzt erfassten Werten des Fahrerdrehmoments 10 und deren zeitlichen Abstand ermittelt wird. Somit kann das Abschätzen des zukünftigen Drehmoment-Verlaufs 2 auf besonders einfache Weise erfolgen.

Anhand des abgeschätzten zukünftigen Drehmoment-Verlaufs 2 wird anschließend ermittelt, ob dieser abgeschätzte zukünftige Drehmoment-Verlauf 2 innerhalb einer vorbestimmten ersten Zeitspanne 3 ausgehend vom momentanen Zeitpunkt 21 einen vorbestimmten ersten Drehmoment-Schwellwert 4 unterschreitet.

Der erste Drehmoment-Schwellwert 4 kann beispielsweise als 0 Nm, alternativ bevorzugt als ein geringer Drehmomentwert, wie beispielsweise 2 Nm, festgelegt sein.

Sofern innerhalb der ersten Zeitspanne 3 der erste Drehmoment-Schwellwert 4 nicht unterschritten wird, wie dies in der Drehmoment-Aufzeichnung 50 der Figur 2 der Fall ist, so kann beispielsweise festgestellt werden, dass der Fahrer die Pedalbetätigung weiter fortführen will. In diesem Fall kann die gesteuerte Betätigung der Antriebseinheit 102 im Normalbetrieb weitergeführt werden.

Beispielsweise kann das Ermitteln, ob der abgeschätzte zukünftige Drehmoment-Verlauf 2 innerhalb der ersten Zeitspanne 3 den ersten Drehmoment-Schwellwert 4 unterschreitet, dadurch erfolgen, dass eine dritte Zeitspanne 6 ermittelt wird, welche ausgehend vom momentanen Zeitpunkt 21 eine Dauer bis zum Zeitpunkts 22 des Unterschreitens des ersten Drehmoment-Schwellwerts 4 durch den abgeschätzten zukünftigen Drehmoment-Verlaufs 2 definiert. Diese dritte Zeitspanne 6 wird dann mit der ersten Zeitspanne 3 verglichen. Wenn die dritte Zeitspanne 6 größer ist als die erste Zeitspanne 3, so wird kein Unterschreiten erkannt.

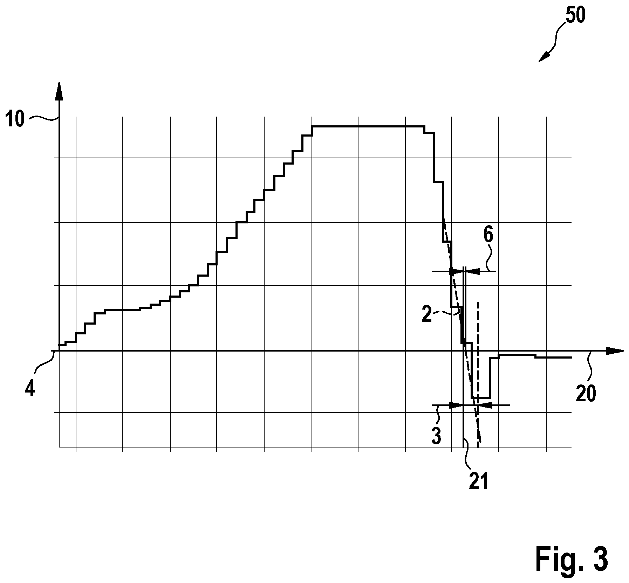

Ein anderer Fall, in dem der abgeschätzte zukünftige Drehmoment-Verlauf 2 innerhalb der ersten Zeitspanne 3 den ersten Drehmoment-Schwellwert 4 unterschreitet, ist beispielhaft in der Figur 3 dargestellt. In diesem Fall ist die dritte Zeitspanne 6 kleiner als die erste Zeitspanne 3.

Wenn der in der Figur 3 dargestellte Fall auftritt, also dass der abgeschätzte zukünftige Drehmoment-Verlauf 2 innerhalb der ersten Zeitspanne 3 den ersten Drehmoment-Schwellwert 4 unterschreitet, so wird bei dem Verfahren mittels der Steuereinheit 103 ein gesteuertes Reduzieren des mittels der Antriebseinheit 102 erzeugten Motordrehmoments bewirkt.

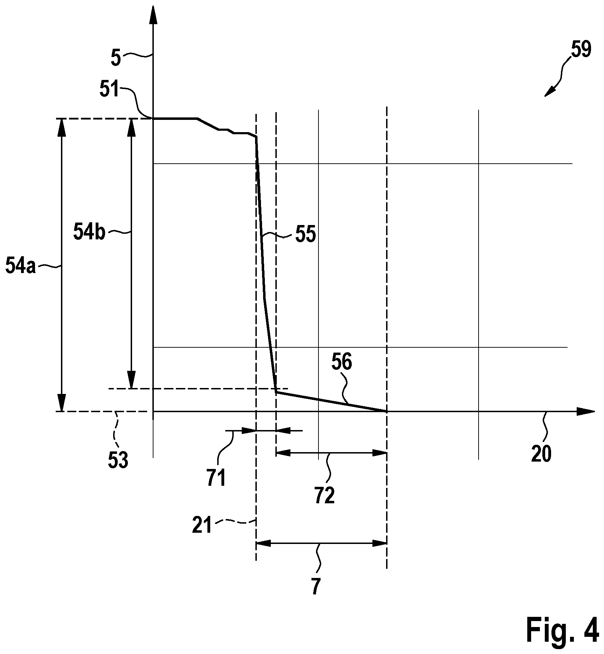

Die Durchführung des gesteuerten Reduzierens des Motordrehmoments wird nachfolgend in Bezug auf die Figur 4 beschrieben. Figur 4 zeigt dabei eine Motormoment-Aufzeichnung 59 während der Durchführung des Verfahrens und für den Fall, dass die in Figur 3 dargestellte Drehmoment-Aufzeichnung 50 vorliegt. Dabei ist in Figur 4 das Motordrehmoment 5 in Abhängigkeit der Zeit 20 dargestellt.

Figur 4 zeigt dabei das Reduzieren des Motordrehmoments 5 im Ansprechen auf das in Figur 3 dargestellte Ermitteln, dass der abgeschätzte zukünftige Drehmoment-Verlauf 2 innerhalb der ersten Zeitspanne 3 den ersten Drehmoment-Schwellwert 4 unterschreitet. Dabei erfolgt, wie in der Figur 4 dargestellt, zum momentanen Zeitpunkt 21 (der dem Zeitpunkt 21 der Figur 3 entspricht) der Beginn des gesteuerten Reduzierens ausgehend von einem momentanen Drehmoment 51.

Das Reduzieren des Motordrehmoments 5 wird dabei derart durchgeführt, dass das Motordrehmoment 5 vom momentanen Drehmoment 51 innerhalb einer vorbestimmten zweiten Zeitspanne 7 bis auf einen vorbestimmten Drehmoment-Wert 53, welcher vorzugsweise 0 Nm beträgt, erfolgt. Hierbei wird das Reduzieren des Motordrehmoments 5 in zwei Phasen durchgeführt: zunächst erfolgt ein erstes Reduzieren in einer ersten Teil-Zeitspanne 71 der zweiten Zeitspanne 7 mit einem ersten Reduktions-Gradienten 55. Unmittelbar nach dem ersten Reduzieren erfolgt ein zweites Reduzieren des Motordrehmoments 5 in einer zweiten Teil-Zeitspanne 72 der zweiten Zeitspanne 7 mit einem zweiten Reduktion-Gradienten 56. Insbesondere entspricht somit eine Summe der ersten Teil-Zeitspanne 71 und der zweiten Teil-Zeitspanne 72 der zweiten Zeitspanne 7.

Dabei sind der erste Reduktion-Gradient 55 und der zweite Reduktions-Gradient 56 sowie die erste Teil-Zeitspanne 71 und die zweite Teil-Zeitspanne 72 derart ausgebildet, dass unmittelbar bei Beginn des gesteuerten Reduzierens eine sehr starke Drehmomentreduktion in kurzer Zeit und anschließend ein sanfteres Ausklingen der Drehmomentreduktion bis zum Drehmoment-Wert 53 erfolgt. Insbesondere erfolgt dabei in beiden Teil-Zeitspannen 71, 72 jeweils ein exponentielles Reduzieren des Motordrehmoments 5.

Bevorzugt entspricht die erste Teil-Zeitspanne 71 dabei maximal 20 %, besonders bevorzugt maximal 10 %, der gesamten zweiten Zeitspanne 7. Weiter bevorzugt wird das Motordrehmoment 5 innerhalb der ersten Teil-Zeitspanne 71 um einen vorbestimmten ersten Reduktions-Betrag 54b reduziert, welcher mindestens 80 %, bevorzugt mindestens 90 %, eines Gesamt-Reduktions-Betrags 54a beträgt. Insbesondere entspricht der Gesamt-Reduktions-Betrag 54a einer Differenz des momentanen Motordrehmoments 51 und des vorbestimmten Drehmoment-Werts 53.

In einer bevorzugten Weiterbildung der Erfindung sind die Zeitspannen und/oder Schwellwerte und/oder Reduktions-Gradienten mittels der Steuereinheit 103 variabel anpassbar ausgebildet. Besonders vorteilhaft ist es, wenn einer oder mehrere dieser Parameter in Abhängigkeit der dritten Zeitspanne 6 erfolgt. Da diese dritte Zeitspanne 6 die abgeschätzte Dauer bis zum Unterschreiten des ersten Drehmoment-Schwellwerts 4 durch den abgeschätzten zukünftigen Drehmoment-Verlauf 2 definiert, kann hierdurch der Vorgang der Drehmoment-Reduktion der Antriebseinheit 102 besonders flexibel und optimal an den momentanen Fahrbetrieb angepasst werden. Beispielsweise kann die zweite Zeitspanne 7 erhöht werden, wenn eine größere dritte Zeitspanne 6 ermittelt wurde. Ferner kann beispielsweise der erste Reduktions-Gradient 55 und/oder der zweite Reduktions-Gradient 56 im Betrag verringert werden, wenn eine größere dritte Zeitspanne 6 ermittelt wurde. Somit kann beispielsweise bei größerer dritter Zeitspanne 6 ein besonders sanftes Abschalten der Antriebseinheit 102 durchgeführt werden, um ein Nachschlagen und eine unerwünschte Geräuschentwicklung besonders zuverlässig zu reduzieren.

Ferner kann das Verfahren eine zusätzliche Überwachung des momentanen Werts 8 des Fahrerdrehmoments 10 (vergleiche Figur 2) aufweisen, wobei der momentane Wert 8 mit einem vorbestimmten zweiten Drehmoment-Schwellwert 9 verglichen wird. Der zweite Drehmoment-Schwellwert 9 kann beispielsweise geringfügig über dem ersten Drehmoment-Schwellwert 4 liegen (vergleiche Figur 2).

Bei dem Verfahren wird dabei, wenn der momentane Wert 8 des Fahrerdrehmoments 10 den zweiten Drehmoment-Schwellwert 9 erreicht oder unterschreitet, die Antriebseinheit 102 sofort abgeschaltet, das heißt es wird eine sofortige Drehmoment-Reduktion auf den Wert 0 Nm bewirkt. Dadurch kann sichergestellt werden, dass bei einem unmittelbar bevorstehenden Stoppen des Pedalierens des Fahrers zuverlässig verhindert wird, dass zum tatsächlichen Zeitpunkt dieses Stoppens die Antriebseinheit 102 kein Motordrehmoment mehr erzeugt.

Besonders vorteilhaft ist es ferner, wenn die Steuereinheit 103 ausgebildet ist, um die Zeitspannen und/oder Schwellwerte und/oder Reduktions-Gradienten selbstlernend mittels maschinellen Lernens anzupassen, das heißt zu optimieren. Dies kann basierend auf einem aufgezeichneten zeitlichen Ist-Drehmoment-Verlauf 1 erfolgen, der während eines Fahrbetriebs des Elektrofahrrads 100 über einen längeren Zeitraum aufgezeichnet wird. Beispielsweise kann dadurch der durch das Verfahren bereitgestellte Abschaltvorgang der Antriebseinheit 102 beim bevorstehenden Stoppen des Pedalierens besonders genau an einen individuellen Fahrstil des Fahrers des Elektrofahrrads 100 angepasst werden, um eine hohe Präzision des Verfahrens und einen höchstmöglichen Fahrkomfort zu bieten.

## Patentansprüche

1. Verfahren zum Betreiben einer Antriebseinheit (102) eines Elektrofahrrads (100), umfassend die Schritte:
- Ermitteln eines zeitlichen Ist-Drehmoment-Verlaufs (1) eines mittels Muskelkraft eines Fahrers des Elektrofahrrads (100) erzeugten Fahrerdrehmoments (10),
- Abschätzen eines zukünftigen Drehmoment-Verlaufs (2) durch Extrapolieren des ermittelten Ist-Drehmoment-Verlaufs (1),
- Ermitteln, ob der abgeschätzte zukünftige Drehmoment-Verlauf (2) innerhalb einer vorbestimmten ersten Zeitspanne (3) einen vorbestimmten ersten Drehmoment-Schwellwert (4) unterschreitet, und
- gesteuertes Reduzieren eines mittels der Antriebseinheit (102) erzeugten Motordrehmoments (5), wenn der abgeschätzte zukünftige Drehmoment-Verlauf (2) innerhalb der ersten Zeitspanne (3) den ersten Drehmoment-Schwellwert (4) unterschreitet.

2. Verfahren nach Anspruch 1, wobei das gesteuerte Reduzieren des Motordrehmoments (5) umfasst: Reduzieren des Motordrehmoments (5) auf einen vorbestimmten Drehmoment-Wert (53), insbesondere auf den Wert Null, innerhalb einer vorbestimmten zweiten Zeitspanne (7).

3. Verfahren nach Anspruch 2, wobei die zweite Zeitspanne (7) eine vorbestimmte Mindest-Zeitspanne von mehr als Null Sekunden ist.

4. Verfahren nach Anspruch 2 oder 3, wobei die zweite Zeitspanne (7) kleiner als die erste Zeitspanne (3) ist.

5. Verfahren nach einem der Ansprüche 2 bis 4, wobei die zweite Zeitspanne (7) mindestens 2 ms, vorzugsweise mindestens 5 ms, insbesondere maximal 100 ms, beträgt.

6. Verfahren nach einem der Ansprüche 2 bis 5, wobei das gesteuerte Reduzieren des Motordrehmoments (5) mit einem vorbestimmten Reduktions-Gradienten (55) durchgeführt wird.

7. Verfahren nach Anspruch 6, ferner umfassend die Schritte:
- Ermitteln einer dritten Zeitspanne (6) als eine Dauer bis zum Unterschreiten des ersten Drehmoment-Schwellwerts (4) durch den abgeschätzten zukünftigen Drehmoment-Verlauf (2), und
- Anpassen der zweiten Zeitspanne (7) und/oder des Reduktions-Gradienten (55) in Abhängigkeit der ermittelten dritten Zeitspanne (6).

8. Verfahren nach einem der Ansprüche 6 oder 7, wobei das gesteuerte Reduzieren des Motordrehmoments (5) die Schritte umfasst:
- erstes Reduzieren des Motordrehmoments (5) in einer ersten Teil-Zeitspanne (71) der zweiten Zeitspanne (7) mit einem ersten Reduktions-Gradienten (55), und
- zweites Reduzieren des Motordrehmoments (5) in einer zweiten Teil-Zeitspanne (72) der zweiten Zeitspanne (7) mit einem zweiten Reduktions-Gradienten (56),
- wobei die zweite Teil-Zeitspanne (72) nach der ersten Teil-Zeitspanne (71) liegt, und
- wobei ein Betrag des zweiten Reduktions-Gradienten (56) kleiner ist als ein Betrag des ersten Reduktions-Gradienten (55).

9. Verfahren nach einem der vorhergehenden Ansprüche, wobei das gesteuerte Reduzieren des Motordrehmoments (5) in Form eines exponentiellen Reduzierens durchgeführt wird.

10. Verfahren nach einem der vorhergehenden Ansprüche, ferner umfassend die Schritte:
- Vergleichen eines Momentanwerts (8) des Fahrerdrehmoments (10) mit einem vorbestimmten zweiten Drehmoment-Schwellwert (9), und
- Abschalten der Antriebseinheit (102), wenn der ermittelte Momentanwert (8) kleiner oder gleich dem zweiten Drehmoment-Schwellwert (9) ist.

11. Verfahren nach Anspruch 10, wobei der zweite Drehmoment-Schwellwert (9) kleiner als der erste Drehmoment-Schwellwert (4) ist.

12. Verfahren nach einem der vorhergehenden Ansprüche, ferner umfassend die Schritte:
- Aufzeichnen des zeitlichen Ist-Drehmoment-Verlaufs (1) des Fahrerdrehmoments (10) während eines Betriebs des Elektrofahrrads (100), und
- Anpassen von zumindest einem Schwellwert und/oder von zumindest einer Zeitspanne mittels maschinellen Lernens basierend auf dem aufgezeichneten zeitlichen Ist-Drehmoment-Verlauf (1).

13. Verfahren nach einem der vorhergehenden Ansprüche, wobei das Extrapolieren mittels Polynom-Approximation, insbesondere mittels linearer Approximation, des ermittelten zeitlichen Ist-Drehmoment-Verlaufs (1) erfolgt.

14. Elektrofahrrad, umfassend eine Antriebseinheit (102) und eine Steuereinheit (103), welche eingerichtet ist, die Antriebseinheit (102) gesteuert zu betätigen, wobei die Steuereinheit (103) ferner eingerichtet ist, ein Verfahren nach einem der vorhergehenden Ansprüche durchzuführen.

15. Elektrofahrrad nach Anspruch 14, ferner umfassend ein Kettenblatt (106) und einen Kurbeltrieb (104), wobei Kettenblatt (106) und Kurbeltrieb (104) starr miteinander verbunden sind.
